# EUROPEAN PATENT SPECIFICATION

(11) **EP 4 149 024 B1**
(45) Date of publication and mention of the grant of the patent: **03.04.2024**
(21) Application number: 21196328.5
(22) Date of filing: 13.09.2021
(51) Int. Cl.: H04B 17/21

(54) **METHOD FOR ENABLING COHERENT RECEPTION OF A RADIO SIGNAL AND RADIO RECEIVER FOR COHERENT RECEPTION OF A RADIO SIGNAL**
VERFAHREN ZUR ERMÖGLICHUNG DES KOHÄRENTEN EMPFANGS EINES FUNKSIGNALS UND FUNKEMPFÄNGER FÜR KOHÄRENTEN EMPFANG EINES FUNKSIGNALS
PROCÉDÉ D'ACTIVATION DE RÉCEPTION COHÉRENTE D'UN SIGNAL RADIO ET RÉCEPTEUR RADIO POUR LA RÉCEPTION COHÉRENTE D'UN SIGNAL RADIO

(43) Date of publication of application: 15.03.2023
(73) Proprietor: u-blox AG, 8800 Thalwil (CH)
(72) Inventor: Beamish, Norman, 8800 Thalwil (CH); Marshall, Chris, 8800 Thalwil (CH)
(74) Representative: Epping - Hermann - Fischer

(56) References cited:
- US-A1- 2008 057 899
- US-A1- 2017 288 790
- US-A1- 2020 244 294

## Description

The present disclosure relates to the field of coherent reception of a radio signal. Specifically, this disclosure is directed to a method for enabling coherent reception of a radio signal and a radio receiver for coherent reception of a radio signal.

Radio signals, also known as radio frequency, RF, signals, for example radio signals according to the long-term evolution, LTE, system as defined by the third generation partnership project, 3GPP, are employed for communication, as well as for other services and applications. In some applications it may be desirable to observe these radio signals over a wide band of frequencies. A radio receiver usually can be tuned to a specific frequency and consequently observes a certain spectrum or band or range around that frequency. In case the signal to be observed or received has a range that is wider than the range of the radio receiver when it is tuned to a specific frequency, additional effort is needed for a meaningful observation of such wideband radio signal. When tuning a radio receiver from one specific frequency to another frequency, a phase of the radio receiver tends to change.

For example, radio receivers for LTE of the state of the art are designed to receive a limited number of channels at any one time. When switching between channels, i.e. tuning the receiver from one specific frequency to the next, the receiver's phase may change. Maintaining receiver phase coherence during such channel switching is not required for LTE communication.

Known solutions employ a predictable phase transition synthesizer, which traces the phases of the synthesizer and predicts the phase upon switching channels. However, still only a limited number of frequencies can be coherently received.

The patent application US2017288790-A1 discloses a self-calibrating transceiver which includes a baseband processor, a receiver chain comprising an amplifier and a digital front end, and a transmitter chain, and a calibration control state machine. The state machine stores amplifier gain steps and is in communication with the transmitter chain, the receiver chain, and the baseband processor.

One objective can therefore be seen in providing a method and a radio receiver which enable coherent reception of a radio signal, thereby overcoming the shortcomings of the known solutions.

The objective is achieved by the subject-matter of the independent claims. Embodiments and developments are defined in the dependent claims.

In one embodiment a method for enabling coherent reception of a radio signal comprises the following steps:
a) tuning a radio receiver to a first receiver frequency,
b) generating within the radio receiver a test signal having a first test frequency,
c) measuring a first phase of the test signal while the radio receiver is tuned to the first receiver frequency,
d) tuning the radio receiver to a second receiver frequency, which is different from the first receiver frequency,
e) measuring a second phase of the test signal while the radio receiver is tuned to the second receiver frequency,
f) calculating a phase relationship depending on the first and second phases of the test signal.

According to the proposed method the test signal having the first test frequency is generated internally, i.e. within the radio receiver. The radio receiver is tuned to the first receiver frequency and the first phase of the test signal is measured. Then the radio receiver is tuned to the second receiver frequency and the second phase of the test signal is measured, while the test signal continues to be generated. The phase relationship depending on or in function of the measured first and second phases of the test signal is calculated subsequently.

The calculation or determination of the phase relationship enables coherent reception of the radio signal, as the phase of the radio receiver when changing from the first receiver frequency to the second receiver frequency is known.

In an embodiment the sequence of steps a) and b) may be reversed in that the step of generating within the radio receiver the test signal having the first test frequency is executed before tuning the radio receiver to the first receiver frequency.

According to an aspect, the test signal is constantly generated without changing the first test frequency, while the radio receiver is tuned from the first receiver frequency to the second receiver frequency.

In a development the first test frequency of the test signal lies within an observation frequency range of the radio receiver.

The observation frequency range of the radio receiver is defined by the receiver frequency, to which the receiver is tuned to, e.g. one of the first or the second receiver frequency. In an example the observation frequency range extends symmetrically around the first or the second receiver frequency, respectively, e.g. resulting from the number of frequencies to be observed when the receiver is tuned to one of the receiver frequencies.

In a development the method is repeated by performing steps a) to f) and using in each repetition the second receiver frequency of the previous repetition as the first receiver frequency in the present repetition, until a tunable frequency range of the radio receiver is covered.

Consequently, after running through steps a), b), c), d), e) and f) a first time, steps a), b), c), d), e) and f) are executed a second time. This second time may be called the first repetition. In general, when a repetition is performed, this may be called an actual repetition that particularly follows a respective previous repetition. In such actual repetition in step a) the radio receiver is tuned to the first receiver frequency, for which in this actual repetition the second receiver frequency of the initial respectively previous execution of step d) is used. In step d) of the actual repetition the radio receiver is tuned to the second receiver frequency, for which a new frequency value, for example a third receiver frequency is used. Therein in each repetition the first test frequency of the test signal lies within the observation frequency range of the radio receiver. By this the test signal is generated in each repetition by using a new frequency value for the first test frequency, said new value of the first test frequency being adapted to the first and second receiver frequencies of the actual repetition. In particular, the new frequency value for the first test frequency in the actual repetition differs to the one from the previous repetition.

In each repetition the test signal is observed twice using two different receiver frequencies, i.e. the first and the second receiver frequency, and a phase relationship is calculated depending on the measured first and second phases of the test signal. The phase relationship may be a phase difference. The calculated phase relationship of each repetition may be stored or memorized. Steps a) to f) are repeated until the tunable frequency range of the radio receiver is covered.

By this the bandwidth of the radio signal that can be coherently received is further increased with each repetition of steps a) to f) of the proposed method.

In a development the radio signal which is enabled to be received coherently has a frequency spectrum which is wider than the observation frequency range of the radio receiver while the radio receiver is tuned to one of the first or the second receiver frequencies.

The radio signal which is enabled to be received coherently may also be referred to as a wideband signal.

In a development in each repetition the first test frequency of the test signal is adapted to the first or the second receiver frequency of the radio receiver, such that the first test frequency of the test signal lies within the observation frequency range of the radio receiver while the radio receiver is tuned to one of the first or the second receiver frequencies.

In a development the first test frequency of the test signal is represented at least by a test carrier frequency. The first and the second receiver frequencies are each represented at least by a receiver carrier frequency.

For example, the first test frequency may be represented by the test carrier frequency and a test baseband frequency. Hence, in various implementations generating the test signal comprises generating a test baseband frequency of the test signal, generating the test carrier frequency, and modulating the test carrier frequency with the test baseband frequency.

By means of the stored phase relationships devised in each repetition, subsequent measurements of the wideband radio signal received over the air by tuning the radio receiver from one receiver frequency to the next may be related to each other, such that coherent reception of the wideband radio signal is possible.

In an embodiment a radio receiver for coherent reception of a radio signal comprises a receiver unit, a sender unit, a connector unit and a control unit. Therein the receiver unit is configured to generate at least a first receiver frequency and a second receiver frequency, which is different from the first receiver frequency. The receiver unit is further configured to measure a first phase of a test signal during generation of the first receiver frequency and to measure a second phase of the test signal during generation of the second receiver frequency. The sender unit is configured to generate the test signal having a first test frequency. The connector unit is coupled to the sender unit and the receiver unit and is configured to provide the test signal from the sender unit to the receiver unit, e.g. directly. The control unit is coupled to the sender unit, the receiver unit and the connector unit for respective control thereof. The control unit is further configured to tune the receiver unit to the first and subsequently to the second receiver frequency and to calculate a phase relationship from the measured first phase and the measured second phase of the test signal. For example, the measured first and second phases of the test signal are sent from the receiver unit to the control unit.

The control unit tunes the receiver unit to the first receiver frequency and causes the sender unit to generate the test signal. The receiver unit measures a first phase of the test signal during generation of the first receiver frequency. The control unit then tunes the receiver unit to the second receiver frequency, while the test signal is still being generated. The receiver unit measures the second phase of the test signal during generation of the second receiver frequency. The control unit calculates the phase relationship from the measured first and second phases of the test signal. Said phase relationship may amount to a phase offset or a phase difference.

By measuring the same test signal twice using two different receiver frequencies, i.e. the first and the second receiver frequency, a bandwidth of the radio signal that can be coherently received is doubled.

According to one aspect the radio receiver for coherent reception of the radio signal is configured to execute the method according to steps a) to f) as defined above. In other words, the method according to steps a) to f) as defined above may be implemented with the radio receiver as specified.

The test signal may also be called a test tone. The test signal is an internal signal which is generated and measured within the radio receiver.

In a development the first test frequency of the test signal lies within an observation frequency range of the radio receiver.

Consequently, the test signal, in particular the first frequency of the test signal, is enabled to be received by the receiver unit when it is tuned to the first or the second receiver frequency.

In a development the control unit is further configured to tune the first test frequency of the sender unit to a different value after calculating the phase relationship. The different value lies within the observation frequency range of the receiver unit.

After calculating the phase relationship, the control unit initiates a repeated measurement of the first and the second phase of the test signal, in that it first tunes the first test frequency of the sender section to a different value and causes the receiver unit to reuse the second receiver frequency for measuring the first phase of the test signal having the different value of the test frequency, and subsequently tunes the receiver unit to a new second receiver frequency for measuring once again the second phase of the test signal having the different value of the first test frequency.

Consequently, a much wider band of frequencies can be coherently received with the proposed radio receiver.

In a development the receiver unit comprises a receiver oscillator, and a measurement unit. The receiver oscillator is configured to generate the first and the second receiver frequencies. The measurement unit is coupled to the receiver oscillator and is configured to measure the first and the second phase of the test signal.

In a development the sender unit comprises a sender oscillator which is configured to generate at least the first test frequency. Therein the first test frequency of the test signal is represented at least by a test carrier frequency.

An oscillator may also be referred to as a synthesizer.

In a development the sender unit further comprises a tone generator and a modulator. The tone generator is configured to generate a test baseband frequency of the test signal. The modulator is configured to generate the test signal by modulation and/or mixing of the test carrier frequency with the test baseband frequency and to provide the test signal to the connector unit.

In a development the first and the second receiver frequencies are each represented at least by a receiver carrier frequency.

According to an option the radio receiver as specified above may be implemented as part of a radio transceiver.

By means of the receiver unit and the sender unit, in particular by the receiver oscillator and the sender oscillator, and the connector unit in between, coherent reception of the radio signal is enabled for a wider band of frequencies.

The proposed method and radio receiver may be employed in the field of LTE for support of applications which need coherent reception of wideband signals, e.g. coherent reception of more than the limited number of LTE channels as defined in the 3GPP standard. Localization is an example of such application.

The proposed approach may be adapted to operate in a mode of coherent transmission of a radio signal over a wide range of frequencies.

The text below explains the proposed method and radio receiver in detail using exemplary embodiments with reference to the drawings. Components and circuit elements that are functionally identical or have an identical effect bear identical reference numbers. Insofar as circuit parts or components correspond to one another in their function, a description of them will not be repeated in each of the following figures. Therein,
Figure 1 shows an exemplary embodiment of a method as proposed,
Figure 2 shows a first exemplary embodiment of a radio receiver as proposed, and
Figure 3 shows a second exemplary embodiment of a radio receiver as proposed.

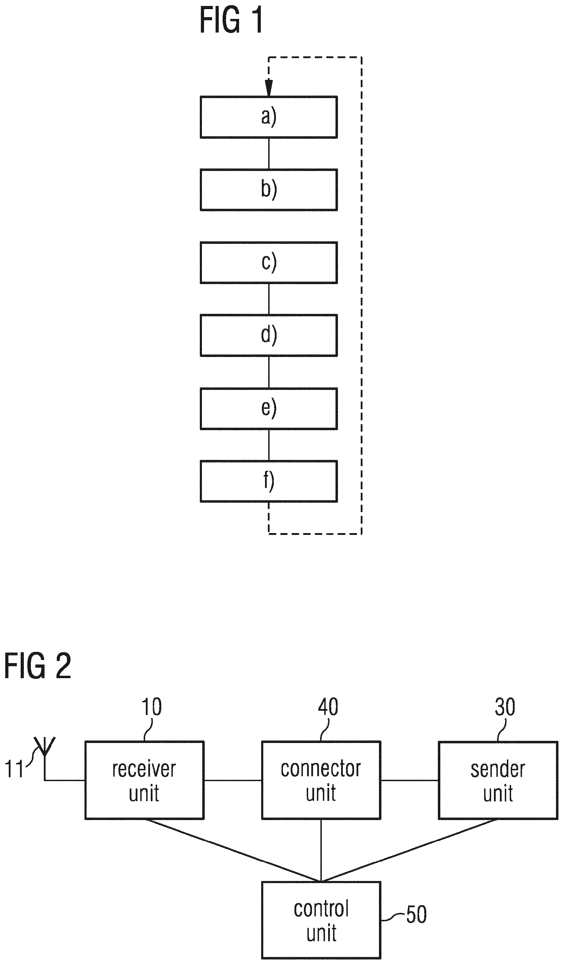

Figure 1 shows an exemplary embodiment of a method as proposed. According to the depicted embodiment the method for enabling coherent reception of a radio signal comprises the following steps:
a) tuning a radio receiver to a first receiver frequency,
b) generating within the radio receiver a test signal having a first test frequency,
c) measuring a first phase of the test signal while the radio receiver is tuned to the first receiver frequency,
d) tuning the radio receiver to a second receiver frequency, which is different from the first receiver frequency,
e) measuring a second phase of the test signal while the radio receiver is tuned to the second receiver frequency,
f) calculating a phase relationship depending on the first and second phases of the test signal.

According to the proposed method the radio receiver is tuned to the first receiver frequency and the test signal having the first test frequency is generated internally, i.e. within the radio receiver. The first phase of the test signal is measured. Then the radio receiver is tuned to the second receiver frequency and the second phase of the test signal is measured, while the test signal continues to be generated. The phase relationship depending on or in function of the measured first and second phases of the test signal is calculated subsequently.

The calculation or determination of the phase relationship enables coherent reception of the radio signal, as the phase of the radio receiver when changing from the first receiver frequency to the second receiver frequency is known. Thereby, the bandwidth for which coherent reception of the radio signal is enabled is doubled.

As already mentioned above, the sequence of steps a) and b) does not matter. Consequently, step a) may be performed before or after step b). Furthermore, the test signal generated in step b) remains constantly on during performance of steps c), d) and e).

Therein, the first test frequency of the test signal lies with an observation frequency range of the radio receiver. The observation frequency range is characterized by the first or the second receiver frequency. The first and second receiver frequencies may each comprise at least a carrier frequency, for instance, a carrier frequency according to the LTE specification. In an exemplary embodiment the observation frequency range amounts to a bandwidth of 20 megahertz.

According to the proposed method the test signal generated in step b) is looked at or observed twice, first in step c) while the receiver is tuned to the first receiver frequency, e.g. X1, and second in step e) while the receiver is tuned to the second receiver frequency, e.g. X2. Tuning of the receiver from the first receiver frequency X1 to the second receiver frequency X2 typically cannot be effected in zero time or without introducing an unknown phase relationship between the first and second receiver frequencies. Therefore, without any further countermeasures, the phase relationship between two measurements using different receiver frequencies would be lost. This is overcome by the proposed method, in that the internally generated test signal remains constantly present and its phase is measured at the first and the second receiver frequency. The phase relationship is calculated from the measured first and second phases of the test signal.

For example, the test signal is generated by modulating or mixing a first test carrier frequency Y1 with a test baseband frequency Z1, such that the first test frequency results e.g. to Y1+Z1.

Optionally, steps a) to f) may be repeated for further increasing the bandwidth of the radio signal which is enabled to be received coherently. For this, after having performed steps a) to f) a first time using X1 as the first receiver frequency and X2 as the second receiver frequency and e.g. Y1+Z1 as the first test frequency, steps a) to f) are performed a second time using the second receiver frequency X2 of the previous run or repetition as the first receiver frequency in step a) of the new repetition, using another receiver frequency X3 as the second receiver frequency in step d) of the new repetition and potentially then using a second test frequency, e.g. Y2+Z1, comprising a second test carrier frequency Y2 and the test baseband frequency Z1, when generating the test signal in step b) of the new repetition. Therein, the second test frequency Y2+Z1 lies within the observation frequency range of the radio receiver when being tuned to the first and the second receiver frequencies X2 and X3 when the method is performed a second time in the new repetition.

Consequently, with each repetition of method steps a) to f) as proposed, the bandwidth of the radio signal which is enabled to be received coherently is further increased.

Figure 2 shows a first exemplary embodiment of a radio receiver as proposed. The radio receiver comprises a receiver unit 10 that can be coupled to an antenna 11, a sender unit 30, a connector unit 40 and a control unit 50. The receiver unit 10 is configured to generate at least a first receiver frequency X1 and a second receiver frequency X2, which is different from the first receiver frequency X1. The receiver unit 10 is further configured to measure a first phase of a test signal during generation of the first receiver frequency X1 and to measure a second phase of the test signal during generation of the second receiver frequency X2. The sender unit 30 is configured to generate the test signal, the test signal having a first test frequency, e.g. Y1+Z1. The connector unit 40 is coupled to the sender unit 30 and the receiver unit 10 and is configured to provide the test signal from the sender unit 30 to the receiver unit 10, e.g. directly. The control unit 50 is coupled to the sender unit 30, the receiver unit 10 and to the connector unit 40 for respective control thereof. The control unit 50 is further configured to tune the receiver unit 10 to the first and subsequently to the second receiver frequency X1, X2 and to calculate a phase relationship from the measured first phase and the measured second phase of the test signal.

The control unit 50 tunes the receiver unit 10 to the first receiver frequency X1 and causes the sender unit 30 to generate the test signal having the first test frequency Y1+Z1. The receiver unit 10 measures the first phase of the test signal during generation of the first receiver frequency X1. The control unit 50 tunes the receiver unit 10 to the second receiver frequency X1, while the test signal is still being generated. The receiver unit 10 measures the second phase of the test signal during generation of the second receiver frequency X2. The control unit 50 calculates the phase relationship from the measured first and second phases of the test signal.

Using the radio receiver as proposed enables increasing the bandwidth of a radio signal which can be received coherently. Details concerning the first and second receiver frequencies, as well as the first test frequency as described above with reference to Figure 1 also apply to the description of Figure 2 and are not repeated again.

Optionally, the control unit 50 is further configured to tune the test frequency of the sender unit 30 to a different value after calculating the phase relationship. As detailed above, the first test frequency in a first run may be tuned to Y1+Z1. In a second run the test frequency then is tuned to the different value Y2+Z1 of a second test frequency. This different value still lies within the observation frequency range of the receiver unit 10.

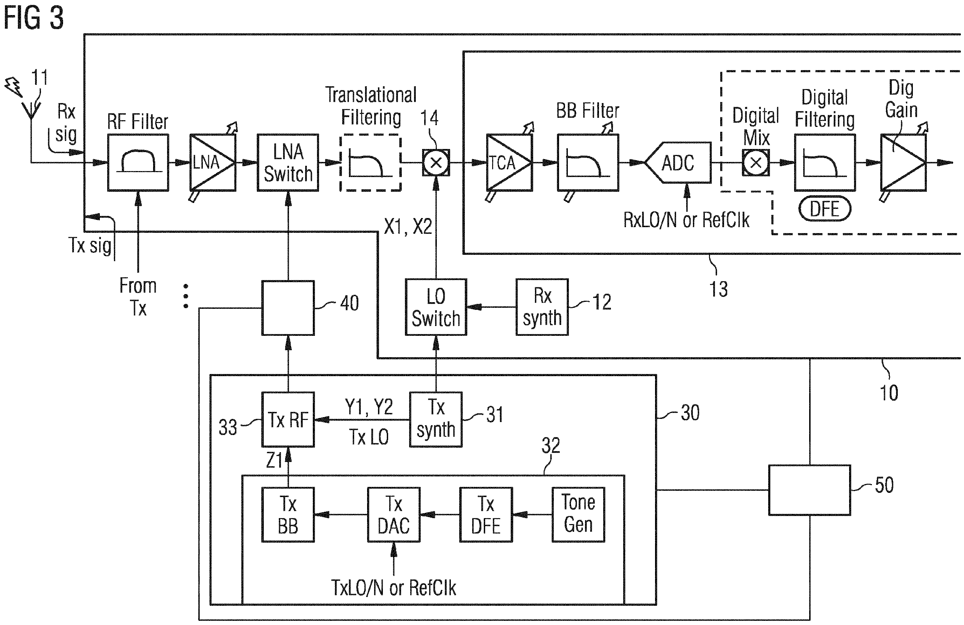

Figure 3 shows a second exemplary embodiment of a radio receiver as proposed. Figure 3 coincides with Figure 2 and additionally discloses more details of an exemplary implementation of the radio receiver as proposed.

According to Figure 3 the receiver unit 10 comprises a receiver oscillator 12 which is configured to generate the first and the second receiver frequency X1, X2. The receiver oscillator 12 may be realized as a synthesizer or local oscillator as known to those skilled in the art. The receiver unit 10 further comprises a measurement unit 13 which is configured to measure the first and the second phases of the test signal. For this purpose the measurement unit 13 comprises different components for processing a received signal. For example, the analog signal is amplified by a transconductance amplifier, TCA, and filtered by a baseband filter. Subsequently the signal is converted to a digital signal in an analog-to-digital converter, ADC. The digital signal is further processed in a digital front end, DFE, which e.g. comprises a digital mixer, one or more digital filters and one or more digital amplifiers. At the output of the DFE, the measured first and second phases of the test signal are provided. For example, the measurement of the first and the second phases is performed in the DFE under the control of the control unit 50.

The sender unit 30 comprises a sender oscillator 31, which is configured to generate at least the first test frequency or the test carrier frequency Y1. Optionally, the sender unit 30 further comprises a tone generator 32 which is configured to generate a test baseband frequency Z1 of the test signal. In the example displayed in Figure 3 the test baseband frequency Z1 is digitally generated, processed by a digital front end, DFE, converted into an analog baseband frequency by digital-to-analog converter DAC and turned into the test baseband frequency Z1. The sender unit 30 further comprises a modulator 33 which is configured to generate the test signal by modulation or mixing of the test carrier frequency Y1 with the test baseband frequency Z1 and to provide the test signal, having the resulting test frequency Y1+Z1, to the connector unit 40. If the test carrier frequency is tuned to Y2, the test frequency results to Y2+Z1.

The connector unit 40 provides the test signal to the receiver unit 10, e.g. directly.

In the depicted exemplary implementation the test signal is provided to the receiver unit 10 by way of a low noise amplifier, LNA, switch. The test signal may further undergo translational filtering before being supplied to a frequency mixer 14. The frequency mixer 14 mixes the test signal with the first or the second receiver frequency. The phase of the resulting signal is subsequently measured in the measurement unit 13 as described above.

The connector unit 40 internally, i.e. within the radio receiver, connects the sender unit 30 to the receiver unit 10. By this, the same test signal, i.e. its phase, can be measured using different receiver frequencies, i.e. the first and the second receiver frequency X1, X2. A phase relationship between different modes of the receiver oscillator 12, i.e. when it is tuned to the first or the second receiver frequency X1, X2, can be established. A radio signal which may subsequently be received via antenna 11 is enabled to be received coherently over a wider frequency range.

The method as described above may be implemented by the radio receiver as depicted in Figures 2 or 3. The method may be repeated various times until a tunable frequency range of the radio receiver, specifically the receiver unit 10 of the radio receiver, more specifically the receiver oscillator 12, is reached. In an example, a typical analog bandwidth of the receiver unit 10 amounts to 20 megahertz. A typical tuning range of the receiver oscillator 12 amounts to approximately 1 gigahertz. With a state-of-the-art radio receiver consequently a radio signal having a bandwidth of 20 megahertz can be coherently received. With the proposed radio receiver a signal of up to 1 gigahertz bandwidth is enabled to be received coherently. This amounts to a coverage improvement of about 50 times.

It will be appreciated that the invention is not limited to the disclosed embodiments and to what has been particularly shown and described hereinabove. The scope of the invention is defined by the appended claims.

The term "comprising" used in the claims or in the description does not exclude other elements or steps of a corresponding feature or procedure. In case that the terms "a" or "an" are used in conjunction with features, they do not exclude a plurality of such features. Moreover, any reference signs in the claims should not be construed as limiting the scope.

### Reference list

- 10: receiver unit
- 11: antenna
- 12: oscillator
- 13: measurement unit
- 14: mixer
- 30: sender unit
- 31: oscillator
- 32: tone generator
- 33: modulator
- 40: connector unit
- 50: control unit
- X1, X2, Y1, Y2, Z1: frequency

## Claims

1. Method for enabling coherent reception of a radio signal comprising the following steps:
a) tuning a radio receiver to a first receiver frequency (X1),
b) generating within the radio receiver a test signal having a first test frequency,
c) measuring a first phase of the test signal while the radio receiver is tuned to the first receiver frequency (X1),
d) tuning the radio receiver to a second receiver frequency (X2), which is different from the first receiver frequency (X1),
e) measuring a second phase of the test signal while the radio receiver is tuned to the second receiver frequency (X2),
f) calculating a phase relationship depending on the first and second phases of the test signal.

2. Method according to claim 1,
wherein the first test frequency of the test signal lies within an observation frequency range of the radio receiver.

3. Method according to claim 2,
wherein the radio signal, which is enabled to be received coherently, has a frequency spectrum which is wider than the observation frequency range of the radio receiver while the radio receiver is tuned to one of the first or the second receiver frequencies (X1, X2).

4. Method according to claim 2 or 3,
wherein the method is repeated by performing steps a) to f) and using in each repetition the second receiver frequency (X2) of a respective previous repetition as the first receiver frequency (X1) until a tunable frequency range of the radio receiver is covered.

5. Method according to claim 4,
wherein in each repetition the first test frequency of the test signal is adapted to the first or second receiver frequency (X1, X2) of the radio receiver, such that the first test frequency of the test signal lies within the observation frequency range of the radio receiver while the radio receiver is tuned to one of the first or the second receiver frequencies (X1, X2).

6. Method according to claim 4 or 5,
wherein in each repetition the first test frequency of the test signal has a frequency value that is different to a frequency value of the first test frequency of the previous repetition.

7. Method according to any of claims 1 to 6,
wherein the first test frequency of the test signal is represented at least by a test carrier frequency (Y1), and wherein the first and the second receiver frequencies (X1, X2) are each represented at least by a receiver carrier frequency.

8. Method according to claim 7, wherein generating the test signal comprises generating a test baseband frequency (Z1) of the test signal, generating the test carrier frequency (Y1), and modulating the test carrier frequency (Y1) with the test baseband frequency (Z1).

9. Radio receiver for coherent reception of a radio signal comprising a receiver unit (10), a sender unit (30), a connector unit (40) and a control unit (50),
- wherein the receiver unit (10) is configured to generate at least a first receiver frequency (X1) and a second receiver frequency (X2), which is different from the first receiver frequency (X1), to measure a first phase of a test signal during generation of the first receiver frequency (X1) and to measure a second phase of the test signal during generation of the second receiver frequency (X2),
- wherein the sender unit (30) is configured to generate the test signal, the test signal having a first test frequency,
- wherein the connector unit (40) is coupled to the sender unit (30) and the receiver unit (10) and is configured to provide the test signal from the sender unit to the receiver unit,
- wherein the control unit (50) is coupled to the sender unit (30), the receiver unit (10) and the connector unit (40) for respective control thereof, the control unit (50) being further configured to tune the receiver unit (10) to the first and subsequently to the second receiver frequency (X1, X2) and to calculate a phase relationship from the measured first phase and the measured second phase of the test signal.

10. Radio receiver according to claim 9,
wherein the first test frequency (Y1) of the test signal lies within an observation frequency range of the radio receiver.

11. Radio receiver according to claim 10,
wherein the control unit (50) is further configured to tune the first test frequency of the sender unit (30) to a different value after calculating the phase relationship, the different value lying within the observation frequency range of the receiver unit (10).

12. Radio receiver according to any of claims 9 to 11, wherein the receiver unit (10) comprises
- a receiver oscillator (12) which is configured to generate the first and the second receiver frequency (X1, X2), and
- a measurement unit (13) coupled to the receiver oscillator (12), the measurement unit (13) being configured to measure the first and the second phase of the test signal.

13. Radio receiver according to any of claims 9 to 12, wherein the sender unit (30) comprises
- a sender oscillator (31) configured to generate at least the first test frequency, wherein the first test frequency of the test signal is represented at least by a test carrier frequency (Y1).

14. Radio receiver according to claim 13, wherein the sender unit (30) further comprises
- a tone generator (32) configured to generate a test baseband frequency (Z1) of the test signal, and
- a modulator (33) configured to generate the test signal by modulation of the test carrier frequency (Y1) with the test baseband frequency (Z1) and to provide the test signal to the connector unit (40).

15. Radio receiver according to any of claims 9 to 14, wherein each of the first and the second receiver frequencies (X1, X2) is represented at least by a receiver carrier frequency.

## Patentansprüche

1. Verfahren zur Ermöglichung eines kohärenten Empfangs eines Funksignals, das die folgenden Schritte umfasst:
a) Abstimmen eines Funkempfängers auf eine erste Empfängerfrequenz (X1),
b) Erzeugen eines Testsignals mit einer ersten Testfrequenz in dem Funkempfänger,
c) Messen einer ersten Phase des Testsignals, während der Funkempfänger auf die erste Empfängerfrequenz (X1) abgestimmt ist,
d) Abstimmen des Funkempfängers auf eine zweite Empfängerfrequenz (X2), die von der ersten Empfängerfrequenz (X1) verschieden ist,
e) Messen einer zweiten Phase des Testsignals, während der Funkempfänger auf die zweite Empfängerfrequenz (X2) abgestimmt ist,
f) Berechnen einer Phasenbeziehung in Abhängigkeit von der ersten und der zweiten Phase des Testsignals.

2. Verfahren nach Anspruch 1,
wobei die erste Testfrequenz des Testsignals innerhalb eines Beobachtungsfrequenzbereichs des Funkempfängers liegt.

3. Verfahren nach Anspruch 2,
wobei das Funksignal, das kohärent empfangen werden kann, ein Frequenzspektrum aufweist, das breiter ist als der Beobachtungsfrequenzbereich des Funkempfängers, während der Funkempfänger auf eine der ersten oder zweiten Empfängerfrequenzen (X1, X2) abgestimmt ist.

4. Verfahren nach Anspruch 2 oder 3,
wobei das Verfahren durch Ausführen der Schritte a) bis f) wiederholt wird und in jeder Wiederholung die zweite Empfängerfrequenz (X2) einer jeweiligen vorherigen Wiederholung als erste Empfängerfrequenz (X1) verwendet wird, bis ein abstimmbarer Frequenzbereich des Funkempfängers abgedeckt ist.

5. Verfahren nach Anspruch 4,
wobei in jeder Wiederholung die erste Testfrequenz des Testsignals an die erste oder zweite Empfängerfrequenz (X1, X2) des Funkempfängers angepasst wird, so dass die erste Testfrequenz des Testsignals innerhalb des Beobachtungsfrequenzbereichs des Funkempfängers liegt, während der Funkempfänger auf eine der ersten oder zweiten Empfängerfrequenzen (X1, X2) abgestimmt ist.

6. Verfahren nach Anspruch 4 oder 5,
wobei in jeder Wiederholung die erste Testfrequenz des Testsignals einen Frequenzwert hat, der sich von einem Frequenzwert der ersten Testfrequenz der vorherigen Wiederholung unterscheidet.

7. Verfahren nach einem der Ansprüche 1 bis 6,
wobei die erste Testfrequenz des Testsignals zumindest durch eine Testträgerfrequenz (Y1) dargestellt wird, und
wobei die erste und die zweite Empfängerfrequenz (X1, X2) jeweils mindestens durch eine Empfängerträgerfrequenz repräsentiert werden.

8. Verfahren nach Anspruch 7, wobei die Erzeugung des Testsignals die Erzeugung einer Testbasisbandfrequenz (Z1) des Testsignals, die Erzeugung der Testträgerfrequenz (Y1) und die Modulation der Testträgerfrequenz (Y1) mit der Testbasisbandfrequenz (Z1) umfasst.

9. Funkempfänger zum kohärenten Empfang eines Funksignals mit einer Empfängereinheit (10), einer Sendereinheit (30), einer Verbindungseinheit (40) und einer Steuereinheit (50),
- wobei die Empfängereinheit (10) eingerichtet ist, wenigstens eine erste Empfängerfrequenz (X1) und eine zweite Empfängerfrequenz (X2), die von der ersten Empfängerfrequenz (X1) verschieden ist, zu erzeugen, eine erste Phase eines Testsignals während der Erzeugung der ersten Empfängerfrequenz (X1) zu messen und eine zweite Phase des Testsignals während der Erzeugung der zweiten Empfängerfrequenz (X2) zu messen,
- wobei die Sendeeinheit (30) eingerichtet ist, das Testsignal zu erzeugen, wobei das Testsignal eine erste Testfrequenz aufweist,
- wobei die Verbindungseinheit (40) mit der Sendereinheit (30) und der Empfängereinheit (10) gekoppelt ist und eingerichtet ist, das Testsignal von der Sendereinheit an die Empfängereinheit zu liefern,
- wobei die Steuereinheit (50) mit der Sendeeinheit (30), der Empfängereinheit (10) und der Anschlusseinheit (40) zu deren jeweiliger Steuerung gekoppelt ist, wobei die Steuereinheit (50) ferner eingerichtet ist, die Empfängereinheit (10) auf die erste und anschließend auf die zweite Empfängerfrequenz (X1, X2) abzustimmen und aus der gemessenen ersten Phase und der gemessenen zweiten Phase des Testsignals eine Phasenbeziehung zu berechnen.

10. Funkempfänger nach Anspruch 9,
wobei die erste Testfrequenz (Y1) des Testsignals innerhalb eines Beobachtungsfrequenzbereichs des Funkempfängers liegt.

11. Funkempfänger nach Anspruch 10,
wobei die Steuereinheit (50) ferner eingerichtet ist, die erste Testfrequenz der Sendeeinheit (30) nach der Berechnung der Phasenbeziehung auf einen anderen Wert abzustimmen, wobei der andere Wert innerhalb des Beobachtungsfrequenzbereichs der Empfangseinheit (10) liegt.

12. Funkempfänger nach einem der Ansprüche 9 bis 11,
wobei die Empfangseinheit (10) umfasst
- einen Empfängeroszillator (12), der eingerichtet ist, die erste und die zweite Empfängerfrequenz (X1, X2) zu erzeugen, und
- eine Messeinheit (13), die mit dem Empfängeroszillator (12) gekoppelt ist, wobei die Messeinheit (13) eingerichtet ist, die erste und die zweite Phase des Testsignals zu messen.

13. Funkempfänger nach einem der Ansprüche 9 bis 12,
wobei die Sendeeinheit (30) umfasst
- einen Senderoszillator (31), der eingerichtet ist, wenigstens die erste Testfrequenz zu erzeugen, wobei die erste Testfrequenz des Testsignals wenigstens durch eine Testträgerfrequenz (Y1) dargestellt wird.

14. Funkempfänger nach Anspruch 13, wobei die Sendeeinheit (30) ferner umfasst
- einen Tongenerator (32), der eingerichtet ist, eine Testbasisbandfrequenz (Z1) des Testsignals zu erzeugen, und
- einen Modulator (33), der eingerichtet ist, das Testsignal durch Modulation der Testträgerfrequenz (Y1) mit der Testbasisbandfrequenz (Z1) zu erzeugen und das Testsignal an die Anschlusseinheit (40) zu liefern.

15. Funkempfänger nach einem der Ansprüche 9 bis 14,
wobei jede der ersten und zweiten Empfängerfrequenzen (X1, X2) zumindest durch eine Empfängerträgerfrequenz dargestellt wird.

## Revendications

1. Méthode pour réaliser la réception cohérente d'un signal radio, comprenant les étapes suivantes :
a) accorder un récepteur radio à une première fréquence de réception (X1),
b) générer dans le récepteur radio un signal d'essai ayant une première fréquence d'essai,
c) mesurer une première phase du signal d'essai pendant que le récepteur radio est accordé sur la première fréquence de réception (X1),
d) accorder le récepteur radio sur une deuxième fréquence de réception (X2), différente de la première fréquence de réception (X1),
e) mesurer une deuxième phase du signal d'essai pendant que le récepteur radio est accordé sur la deuxième fréquence de réception (X2),
f) calculer une relation de phase en fonction de la première et de la deuxième phase du signal d'essai.

2. Méthode selon la revendication 1,
dans laquelle la première fréquence du signal d'essai se situe dans une gamme de fréquences d'observation du récepteur radio.

3. Méthode selon la revendication 2,
dans laquelle le signal radio, qui est apte à être reçu de manière cohérente, a un spectre de fréquences qui est plus large que la gamme de fréquences d'observation du récepteur radio lorsque le récepteur radio est accordé sur l'une des premières ou des deuxièmes fréquences du récepteur (X1, X2).

4. Méthode selon la revendication 2 ou 3,
dans laquelle la méthode est répétée en exécutant les étapes a) à f) et en utilisant dans chaque répétition la deuxième fréquence de réception (X2) d'une répétition précédente respective comme première fréquence de réception (X1) jusqu'à ce qu'une gamme de fréquences accordables du récepteur radio soit couverte.

5. Méthode selon la revendication 4,
dans lequel, à chaque répétition, la première fréquence d'essai du signal d'essai est adaptée à la première ou à la deuxième fréquence de réception (X1, X2) du récepteur radio, de sorte que la première fréquence d'essai du signal d'essai se situe dans la gamme de fréquences d'observation du récepteur radio lorsque le récepteur radio est accordé sur l'une des premières ou des deuxièmes fréquences de réception (X1, X2).

6. Méthode selon la revendication 4 ou 5,
dans laquelle, à chaque répétition, la première fréquence d'essai du signal d'essai a une valeur de fréquence différente d'une valeur de fréquence de la première fréquence d'essai de la répétition précédente.

7. Méthode selon l'une des revendications 1 à 6,
dans laquelle la première fréquence d'essai du signal d'essai est représentée au moins par une fréquence porteuse d'essai (Y1), et
dans laquelle la première et la deuxième fréquence du récepteur (X1, X2) sont chacune représentées au moins par une fréquence porteuse du récepteur.

8. Méthode selon la revendication 7, dans laquelle la génération du signal d'essai comprend la génération d'une fréquence de bande de base d'essai (Z1) du signal d'essai, la génération de la fréquence porteuse d'essai (Y1) et la modulation de la fréquence porteuse d'essai (Y1) avec la fréquence de bande de base d'essai (Z1).

9. Récepteur radio pour la réception cohérente d'un signal radio comprenant une unité de réception (10), une unité d'émission (30), une unité de connexion (40) et une unité de commande (50),
- dans lequel l'unité de réception (10) est configurée pour générer au moins une première fréquence de réception (X1) et une seconde fréquence de réception (X2), qui est différente de la première fréquence de réception (X1), pour mesurer une première phase d'un signal d'essai pendant la génération de la première fréquence de réception (X1) et pour mesurer une seconde phase du signal d'essai pendant la génération de la seconde fréquence de réception (X2),
- l'unité d'émission (30) est configurée pour générer le signal d'essai, le signal d'essai ayant une première fréquence d'essai,
- l'unité de connexion (40) est couplée à l'unité émettrice (30) et à l'unité réceptrice (10) et est configurée pour fournir le signal d'essai de l'unité émettrice à l'unité réceptrice,
- l'unité de commande (50) est couplée à l'unité émettrice (30), à l'unité réceptrice (10) et à l'unité de connexion (40) pour les contrôler respectivement, l'unité de commande (50) étant en outre configurée pour accorder l'unité réceptrice (10) à la première puis à la seconde fréquence de réception (X1, X2) et pour calculer une relation de phase à partir de la première phase mesurée et de la seconde phase mesurée du signal d'essai.

10. Récepteur radio selon la revendication 9,
dans lequel la première fréquence d'essai (Y1) du signal d'essai se situe dans une gamme de fréquences d'observation du récepteur radio.

11. Récepteur radio selon la revendication 10,
dans lequel l'unité de commande (50) est en outre configurée pour accorder la première fréquence d'essai de l'unité émettrice (30) à une valeur différente après avoir calculé la relation de phase, la valeur différente se situant dans la plage de fréquence d'observation de l'unité réceptrice (10).

12. Récepteur radio selon l'une des revendications 9 à 11, dans lequel l'unité de réception (10) comprend
- un oscillateur de récepteur (12) configuré pour générer la première et la deuxième fréquence de récepteur (X1, X2), et
- une unité de mesure (13) couplée à l'oscillateur récepteur (12), l'unité de mesure (13) étant configurée pour mesurer la première et la seconde phase du signal de test.

13. Récepteur radio selon l'une des revendications 9 à 12, dans lequel l'unité d'émission (30) comprend
- un oscillateur émetteur (31) configuré pour générer au moins la première fréquence de test, la première fréquence de test du signal de test étant représentée au moins par une fréquence porteuse de test (Y1).

14. Récepteur radio selon la revendication 13, dans lequel l'unité d'émission (30) comprend en outre
- un générateur de tonalité (32) configuré pour générer une fréquence de bande de base de test (Z1) du signal de test, et
- un modulateur (33) configuré pour générer le signal d'essai par modulation de la fréquence porteuse d'essai (Y1) avec la fréquence de bande de base d'essai (Z1) et pour fournir le signal d'essai à l'unité de connexion (40) .

15. Récepteur radio selon l'une des revendications 9 à 14, dans lequel chacune des première et deuxième fréquences du récepteur (X1, X2) est représentée au moins par une fréquence porteuse du récepteur.
